# EUROPEAN PATENT APPLICATION

(11) **EP 4 502 126 A1**
(43) Date of publication of application: **05.02.2025**
(21) Application number: 23781116.1
(22) Date of filing: 31.03.2023
(51) Int. Cl.: C10N 10/04, C10N 10/06, C10N 20/06, C10N 30/00, C10N 50/10, C10M 105/32, C10M 107/02, C10M 125/10, C10M 145/26, C09K 5/14

(54) **THERMALLY CONDUCTIVE GREASE COMPOSITION**

(30) Priority: 31.03.2022 JP 2022061109
(71) Applicant: Cosmo Oil Lubricants Co., Ltd., Tokyo 105-8331 (JP)
(72) Inventor: TERAUCHI, Ryuji, Satte-shi, Saitama 340-0193 (JP); KIMURA, Mitsunobu, Satte-shi, Saitama 340-0193 (JP)
(74) Representative: Adamson Jones
(86) International application number: PCT/JP2023/013735
(87) International publication number: WO 2023/191108

(57) **Abstract**

This thermally conductive grease composition contains a base oil, a thermally conductive filler, and calcium carbonate particles.

## Description

### Technical Field

The present disclosure relates to a thermally conductive grease composition.

### Background Art

Among semiconductor components used in electronic devices and the like, there are components that generate heat during use, such as a CPU of a computer and a power semiconductor for power supply control. In order to protect these semiconductor components from heat and enable them to function normally, there is a method of conducting generated heat to a heat dissipation component such as a heat sink and dissipating the heat. A thermally conductive grease composition is applied between a heat generating component such as a semiconductor component and a heat dissipating component so as to bring the components into close contact with each other, and is used for enhancing heat conduction.

As the thermally conductive grease composition, for example, Japanese Patent Publication (JP-B) No. 4667882 proposes "A high thermally conductive compound containing (A) a metal powder having a thermal conductivity of 200 W/m·K or more and an average particle diameter of from 5 to 50 µm, (B) a coarse particle inorganic filler having a new Mohs hardness of 6 or more and an average particle diameter of from 5 to 50 µm, (C) a fine particle inorganic filler having an average particle diameter of from 0.15 to 2 µm, (D) a base oil, and (E) one or more surface modifiers selected from a (poly)glyceryl ether, and an alkenyl succinimide and a boron derivative thereof, in which a total content of (A), (B), and (C) is in a range of from 88 to 97% by mass of a total amount of the compound, a mass ratio of a total content of (A) and (B) to a content of (C) is in a range of from 20:80 to 85:15, a content of (D) is less than 12% by mass of the total amount of the compound, and the components (A), (B), (C), (D), and (E) are blended so that a content of the component (E) is from 0.08 to 4% by mass of the total amount of the compound".

Japanese Patent Publication (JP-B) No. 5300408 proposes "A thermally conductive silicone grease composition containing components (A) to (D), (component (A): aluminum hydroxide powder mixture; component (B): organopolysiloxane; component (C): inorganic compound powder; and component (D): hydrolyzable organopolysiloxane having trifunctionality at one end)".

### SUMMARY OF INVENTION

### Technical Problem

Regarding the thermally conductive grease composition, the thermally conductive grease composition may be displaced as a result of a thermal shock (pump-out phenomenon) or the like, making it difficult to dissipate heat sufficiently. In such cases, heat-generating components such as a semiconductor component have sometimes caused malfunctions.

Therefore, an object of the embodiments of the disclosure is to provide a thermally conductive grease composition that suppresses occurrence of the pump-out phenomenon. Solution to Problem

Means for solving the above problems include the following means.
<1> A thermally conductive grease composition contains:
   a base oil;
   a thermally conductive filler; and
   calcium carbonate particles.
<2> The thermally conductive grease composition according to <1>, in which a volume average particle diameter of the calcium carbonate particles is from 10 nm to 200 nm.
<3> The thermally conductive grease composition according to <1> or <2>, in which a content of the calcium carbonate particles is from 0.1% by mass to 1% by mass with respect to a content of the thermally conductive filler.
<4> The thermally conductive grease composition according to any one of <1> to <3>, containing a surface modifier including a polyalkylene glycol compound having a hydroxy group.
<5> The thermally conductive grease composition according to any one of <1> to <4>, in which the base oil includes a polyalphaolefin and an organic acid ester.
<6> The thermally conductive grease composition according to any one of <1> to <5>, in which the thermally conductive filler includes at least one selected from the group consisting of a zinc oxide and an aluminum oxide.
<7> The thermally conductive grease composition according to any one of <1> to <6>, in which the thermally conductive filler includes a thermally conductive filler A having a volume average particle diameter of from 0.15 µm to less than 2 µm and a thermally conductive filler B having a volume average particle diameter of from 2 µm to 40 µm.

### Advantageous Effects of Invention

According to an embodiment of the disclosure, there is provided a thermally conductive grease composition that suppresses occurrence of a pump-out phenomenon.

### DESCRIPTION OF EMBODIMENTS

Hereinafter, embodiments that are examples of the disclosure will be described. These descriptions and examples illustrate embodiments and do not limit the scope of the invention.

With regard to the stepwise numerical ranges described herein, the upper limit value or the lower limit value described in one numerical range may be replaced with the upper limit value or the lower limit value of another stepwise numerical range. In the numerical ranges described herein, upper limit values or lower limit values of the numerical value ranges may be replaced with values described in Examples.

Each component may contain a plurality of corresponding substances.

In a case in which a plurality of substances corresponding to each component are present in a composition, unless otherwise specified, the amount of each component in the composition means the total amount of the plurality of substances present in the composition.

### <Thermally Conductive Grease Composition>

A thermally conductive grease composition according to the disclosure contains a base oil, a thermally conductive filler, and calcium carbonate particles.

The thermally conductive grease composition according to the disclosure suppresses the occurrence of the pump-out phenomenon by the above configuration.

The pump-out phenomenon is a phenomenon in which the position of the thermally conductive grease composition shifts due to a thermal shock.

The reason is presumed as follows.

When the thermally conductive grease composition according to the disclosure contains calcium carbonate particles, the calcium carbonate particles, the base oil, and the thermally conductive filler interact with each other, and the thermally conductive grease composition is thickened. Therefore, even when subjected to a thermal shock or the like, the thermally conductive grease composition is less likely to shift.

Therefore, the thermally conductive grease composition according to the disclosure suppresses the occurrence of the pump-out phenomenon.

### (Base Oil)

The thermally conductive grease composition according to the disclosure contains a base oil.

The base oil is not particularly limited, and examples thereof include mineral oil, synthetic hydrocarbon oil, an organic acid ester, a phosphoric acid ester, silicone oil, and fluorine oil.

The base oil may be contained singly, or in combination of two or more kinds thereof.

Examples of the mineral oil include oils obtained by appropriately combining refining methods for a lubricating oil fraction of crude oil, such as solvent refining, hydrogenation refining, hydrogenolysis refining, and hydrogenation dewaxing. Examples of the mineral oil include highly refined paraffinic mineral oils obtained by subjecting hydrogenated refined oils, catalytic isomerized oils, and the like to a treatment such as solvent dewaxing or hydrogenation dewaxing.

Examples of the synthetic hydrocarbon oil include a polyalphaolefin.

Examples of the polyalphaolefin include polyalphaolefins obtained by mixing and polymerizing alpha olefins produced using ethylene; propylene; butene; and a derivative thereof as a raw material singly or in combination of two or more kinds thereof.

The polyalphaolefin is preferably a polymer of an alphaolefin having from 6 to 18 carbon atoms.

The polyalphaolefin preferably contains at least one selected from the group consisting of a polymer of 1-decene and a polymer of 1-dodecene.

Examples of the organic acid ester include a monoester, a diester, and a polyol ester.

Examples of the monoester include an ester of a monobasic acid and an alcohol.

Examples of the monobasic acid include fatty acids such as butanoic acid, pentanoic acid, hexanoic acid, heptanoic acid, octanoic acid, nonanoic acid, decanoic acid, dodecanoic acid, myristic acid, pentadecylic acid, palmitic acid, margaric acid, stearic acid, eicosanoic acid, docosanoic acid, palmitoleic acid, oleic acid, and ricinoleic acid; acrylic acid; and methacrylic acid.

Examples of the alcohol used for the synthesis of the monoester include oleyl alcohol, lauryl alcohol, methanol, ethanol, pentanol, hexanol, ethylene glycol, propylene glycol, glycerol, neopentyl glycol, trimethylolmethane, trimethylolethane, trimethylolpropane, trimethylolbutane, 1,2,6-hexanetriol, pentaerythritol, dipentaerythritol, and lauryl alcohol.

Examples of the diester include an ester of a dibasic acid and an alcohol.

Examples of the dibasic acid include adipic acid, azelaic acid, sebacic acid, and dodecanedioic acid.

The alcohol used for the synthesis of the diester may be a monohydric alcohol or a polyhydric alcohol having two or more hydroxyl groups in one molecule.

As the alcohol used for the synthesis of the diester, the same alcohol as the alcohol used for the synthesis of the monoester can be applied.

Examples of the polyol ester include an ester of a polyol and a saturated fatty acid.

Examples of the polyol include a dihydric alcohol and a polyol in which no hydrogen atom is present on the carbon at the β-position based on the hydroxy group.

Examples of the dihydric alcohol include ethylene glycol, propylene glycol, butylene glycol, 2-butyl-2-ethylpropanediol, and 2,4-diethyl-pentanediol.

Specific examples of the polyol in which no hydrogen atom is present on the carbon at the β-position based on the hydroxy group include neopentyl glycol, trimethylolpropane, and pentaerythritol.

The saturated fatty acid is not particularly limited, and examples thereof include enanthic acid, caprylic acid, pelargonic acid, capric acid, undecylic acid, lauric acid, tridecylic acid, myristic acid, pentadecylic acid, stearic acid, nonadecanoic acid, arachidic acid, and behenic acid.

Examples of the phosphoric acid ester include triethyl phosphate, tributyl phosphate, triphenyl phosphate, tricresyl phosphate, and trixylenyl phosphate.

Examples of the silicone oil include polysiloxanes such as dimethylpolysiloxane and methylphenylpolysiloxane; and modified silicone.

Examples of the fluorine oil include perfluoropolyether.

From the viewpoint of suppressing the occurrence of the pump-out phenomenon, the base oil preferably contains a polyalphaolefin and an organic acid ester.

From the viewpoint of suppressing the occurrence of the pump-out phenomenon, a content of the polyalphaolefin is preferably from 70% by mass to 99% by mass, more preferably from 80% by mass to 99% by mass, and still more preferably from 85% by mass to 99% by mass, with respect to the total content of the polyalphaolefin and the ester.

A content of the base oil is preferably from 3.5% by mass to 8.5% by mass, more preferably from 4.0% by mass to 8.0% by mass, and still more preferably from 4.0% by mass to 7.0% by mass, with respect to the total mass of the thermally conductive grease composition.

From the viewpoint of suppressing the occurrence of the pump-out phenomenon, a kinematic viscosity at 40°C (also referred to as a 40°C kinematic viscosity) of the base oil is preferably from 10 mm²/s to 600 mm²/s and more preferably from 20 mm²/s to 450 mm²/s.

The 40°C kinematic viscosity is a value measured based on JIS K2283:2000 kinematic viscosity test method.

### (Thermally Conductive Filler)

The thermally conductive grease composition according to the disclosure contains a thermally conductive filler.

The thermally conductive filler is a filler having a thermal conductivity of 5 W/m K or more.

The thermal conductivity of the thermally conductive filler is a value measured by a laser flash method (JIS R1611:2010).

The material of the thermally conductive filler is not particularly limited, and examples thereof include zinc oxide, magnesium oxide, aluminum oxide, titanium oxide, boron nitride, aluminum nitride, carbon, silicon carbide, and silica.

From the viewpoint of suppressing the occurrence of the pump-out phenomenon, the thermally conductive filler preferably contains at least one selected from the group consisting of zinc oxide and aluminum oxide.

A volume average particle diameter of the thermally conductive filler is preferably from 0.1 µm to 50 µm, more preferably from 0.15 µm to 45 µm, and still more preferably from 0.15 µm to 40 µm.

The volume average particle diameter of the thermally conductive filler is measured by a laser diffraction scattering method in accordance with JIS Z 8825:2013 (corresponding international standard: ISO13320).

Specifically, a volume distribution of the thermally conductive filler is measured for a sample containing the thermally conductive filler using a laser diffraction scattering particle size measuring apparatus. Based on the obtained measured value (volume distribution), the volume average particle diameter of the thermally conductive filler contained in the sample can be determined.

As an example of the measuring apparatus, a nanoparticle size distribution measuring apparatus SALD-7500nano manufactured by Shimadzu Corporation can be used as a laser diffraction scattering particle size measuring apparatus.

The thermally conductive filler may be a surface-treated thermally conductive filler. The surface-treated thermally conductive filler can contribute to improvement of affinity with components other than the thermally conductive filler.

The surface treatment of the thermally conductive filler is not particularly limited, and may be a physical treatment or a chemical treatment, and a known treatment capable of treating surfaces of particles constituting the thermally conductive filler can be applied.

The surface treatment is preferably a treatment using a surface treatment agent.

Examples of the surface treatment agent include a silane-based coupling agent, a titanium-based coupling agent, a carboxylic acid-based coupling agent, a phosphoric acid-based coupling agent, a fatty acid, a polymer compound, a surfactant, and a fat and oil.

The thermally conductive filler is preferably surface-treated using a silane-based coupling agent as a surface treatment agent from the viewpoint of dispersibility.

A content of the thermally conductive filler is preferably from 80% by mass to 98% by mass, more preferably from 85% by mass to 97% by mass, and still more preferably from 90% by mass to 97% by mass, with respect to the total mass of the thermally conductive grease composition.

From the viewpoint of suppressing the occurrence of the pump-out phenomenon, the thermally conductive filler preferably contains two or more kinds of thermally conductive fillers having different volume average particle diameters.

The thermally conductive filler preferably contains a thermally conductive filler A having a volume average particle diameter of from 0.15 µm to less than 2 µm and a thermally conductive filler B having a volume average particle diameter of from 2 µm to 40 µm.

The thermally conductive filler A and the thermally conductive filler B may contain thermally conductive fillers having different volume average particle diameters.

### -Thermally Conductive Filler A-

The thermally conductive filler A is a thermally conductive filler having a volume average particle diameter of from 0.15 µm to less than 2 µm.

A preferred aspect of the material of the thermally conductive filler A is as described above.

The thermally conductive filler A may be surface-treated.

From the viewpoint of suppressing the occurrence of the pump-out phenomenon, the volume average particle diameter of the thermally conductive filler A is preferably from 0.15 µm to 1.5 µm, more preferably from 0.20 µm to 1.0 µm, and still more preferably from 0.30 µm to 0.80 µm.

A procedure for measuring the volume average particle diameter of the thermally conductive filler A is as described above.

### -Thermally Conductive Filler B-

The thermally conductive filler B is a thermally conductive filler having a volume average particle diameter of from 2 µm to 40 µm.

A preferred aspect of the material of the thermally conductive filler B is as described above.

The thermally conductive filler B may be surface-treated.

From the viewpoint of suppressing the occurrence of the pump-out phenomenon, the volume average particle diameter of the thermally conductive filler B is preferably from 3 µm to 30 µm, more preferably from 3 µm to 25 µm, and still more preferably from 3 µm to 20 µm.

A procedure for measuring the volume average particle diameter of the thermally conductive filler B is as described above.

### -Preferred Aspects of Thermally Conductive Filler A and Thermally Conductive Filler B-

From the viewpoint of suppressing the occurrence of the pump-out phenomenon, it is preferable that both the thermally conductive filler A and the thermally conductive filler B contain zinc oxide, or both the thermally conductive filler A and the thermally conductive filler B contain aluminum oxide.

From the viewpoint of suppressing the occurrence of the pump-out phenomenon, a ratio of a content of the thermally conductive filler A to a content of the thermally conductive filler B (content of thermally conductive filler A/content of thermally conductive filler B) is more preferably from 0.30 to 0.80, more preferably from 0.50 to 0.75, and still more preferably from 0.60 to 0.70 on a mass basis.

The total content of the thermally conductive filler A and the thermally conductive filler B is preferably from 80% by mass to 100% by mass, more preferably from 90% by mass to 100% by mass, still more preferably from 95% by mass to 100% by mass, and particularly preferably 100% by mass, with respect to the total mass of the thermally conductive filler.

### (Calcium Carbonate Particles)

The thermally conductive grease composition according to the disclosure contains calcium carbonate particles.

The calcium carbonate particles refer to particles containing calcium carbonate as a main component (that is, a content with respect to the particles is 90% by mass or more).

From the viewpoint of suppressing the occurrence of the pump-out phenomenon, a volume average particle diameter of the calcium carbonate particles is preferably from 10 nm to 200 nm, more preferably from 20 nm to 150 nm, and still more preferably from 25 nm to 100 nm.

The volume average particle diameter of the calcium carbonate particles is measured by a laser diffraction scattering method in accordance with JIS Z 8825:2013 (corresponding international standard: ISO13320).

Specifically, a volume distribution of the calcium carbonate particles is measured for a sample containing the calcium carbonate particles using a laser diffraction scattering particle size measuring apparatus. Based on the obtained measured value (volume distribution), the volume average particle diameter of the calcium carbonate particles contained in the sample can be determined.

As an example of the measuring apparatus, a nanoparticle size distribution measuring apparatus SALD-7500nano manufactured by Shimadzu Corporation can be used as a laser diffraction scattering particle size measuring apparatus.

The calcium carbonate particles may be surface-treated calcium carbonate particles. The surface-treated calcium carbonate particles can contribute to improvement of affinity with components other than the calcium carbonate particles.

The surface treatment of the calcium carbonate particles is not particularly limited, and may be a physical treatment or a chemical treatment, and a known treatment capable of treating surfaces of calcium carbonate particles can be applied.

The surface treatment is preferably a treatment using a surface treatment agent.

Examples of the surface treatment agent include a rosin-based compound and a fatty acid.

Examples of the rosin-based compound include a modified rosin and a polymerized rosin.

The modified rosin refers to a modified natural rosin, and examples thereof include a hydrogenated rosin in which a double bond in the molecule is eliminated or reduced by hydrogenating a natural rosin at a high pressure using a noble metal catalyst such as a nickel catalyst, a platinum catalyst, or a palladium catalyst; and a disproportionated rosin in which unstable conjugated double bonds in the molecule are eliminated by heating a natural rosin at a high temperature in the presence of a noble metal catalyst or a halogen catalyst.

The polymerized rosin is a product obtained by reacting natural rosins or modified rosins with each other, and refers to a dimerized product, a trimerized product, or the like thereof.

The calcium carbonate particles are preferably surface-treated using a rosin-based compound as a surface treatment agent from the viewpoint of dispersibility and the viewpoint of suppressing the occurrence of the pump-out phenomenon.

From the viewpoint of suppressing the occurrence of the pump-out phenomenon, a content of the calcium carbonate particles is preferably from 0.1% by mass to 1% by mass, more preferably from 0.1% by mass to 0.8% by mass, and still more preferably from 0.1% by mass to 0.7% by mass, with respect to the content of the thermally conductive filler.

By setting the content of the calcium carbonate particles to 0.1% by mass or more with respect to the content of the thermally conductive filler, the occurrence of the pump-out phenomenon is more easily suppressed.

By setting the content of the calcium carbonate particles to 1% by mass or less with respect to the content of the thermally conductive filler, thermal conductivity is easily improved.

### (Surface Modifier)

The thermally conductive grease composition according to the disclosure preferably contains a surface modifier.

As the surface modifier, various surface modifiers can be used, and a compound having a moiety expressing lipophilicity and a functional group adsorbed to the thermally conductive filler is preferable.

Specific examples of the surface modifier include a carboxylic acid dispersant and a polyalkylene glycol compound.

The carboxylic acid dispersant is a compound having at least one carboxy group in the molecule.

The carboxylic acid dispersant is preferably a polycarboxylic acid (compound having two or more carboxy groups in one molecule).

A weight average molecular weight of the carboxylic acid dispersant is preferably from 100 to 2,000, more preferably from 150 to 1,500, and still more preferably from 200 to 1,000.

The weight average molecular weight of the carboxylic acid dispersant means a weight average molecular weight in terms of polystyrene measured by gel permeation chromatography (GPC). The measurement conditions and apparatuses are as follows.
Measuring apparatus: Shodex GPC-101
Column: Shodex GPC LF-804 (number of columns: 3)
Detector: RI (differential refraction detector)
Temperature: 40°C
Mobile phase: THF (tetrahydrofuran)
Flow rate: 1 mL/min
Sample concentration: 1.0 mass%/vol%
Sample injection amount: 100 µL

Examples of the carboxylic acid dispersant include Hypermer KD-4 (weight average molecular weight: 1,700), Hypermer KD-9 (weight average molecular weight: 760), Hypermer KD-12 (weight average molecular weight: 490), and Hypermer KD-16 (weight average molecular weight: 370) manufactured by Croda Japan.

The polyalkylene glycol compound is a polymer compound having a repeating structure of ether bonds, and refers to a compound produced, for example, by ring-opening polymerization of a cyclic ether.

From the viewpoint of suppressing the occurrence of the pump-out phenomenon, the polyalkylene glycol compound is preferably a polyalkylene glycol compound having a hydroxy group.

The polyalkylene glycol compound having a hydroxy group tends to have high adhesiveness. Therefore, since the surface modifier adsorbed on the surface of the thermally conductive filler adheres to an adherend, the occurrence of the pump-out phenomenon is further suppressed.

Examples of the polyalkylene glycol compound having a hydroxy group include polyalkylene glycol and an etherified product of polyalkylene glycol.

Examples of the polyalkylene glycol include polyethylene glycol, polypropylene glycol, and polybutylene glycol.

Examples of the etherified product of the polyalkylene glycol include a compound in which polyalkylene glycol and a hydrocarbon group are bonded by an ether bond.

The carbon number of the hydrocarbon group contained in the etherified product of the polyalkylene glycol is, for example, from 12 to 65.

The structure of the hydrocarbon group is not particularly limited, and may be linear, branched, or cyclic.

Specific examples of the etherified product of the polyalkylene glycol include polyoxyethylene monooleyl ether, polyoxyethylene monostearyl ether, polyoxyethylene monocetyl ether, and polyoxyethylene lanolin alcohol, and polyoxyethylene lanolin alcohol is preferable from the viewpoint of suppressing the occurrence of the pump-out phenomenon.

A content of the surface modifier is preferably from 0.1% by mass to 1.0% by mass, more preferably from 0.1% by mass to 0.7% by mass, and still more preferably from 0.1% by mass to 0.5% by mass, with respect to the entire thermally conductive grease composition.

The surface modifier may be contained singly, or in combination of two or more kinds thereof.

### (Other Additives)

The thermally conductive grease composition according to the disclosure may contain additives other than the base oil, the thermally conductive filler, the calcium carbonate particles, and the surface modifier.

Examples of other additives include an antioxidant, a rust inhibitor, a corrosion inhibitor, a thickener, a viscosity increasing agent, and a cleaning agent.

### (Physical Property Values of Thermally Conductive Grease Composition)

### -Thermal Conductivity -

A thermal conductivity of the thermally conductive grease composition according to the disclosure is preferably 2.5 W/m·K or more, more preferably 3.0 W/m·K or more, and still more preferably 3.5 W/m·K or more from the viewpoint of improving the efficiency of heat dissipation.

The thermal conductivity is measured in accordance with ISO22007-2.

As an apparatus for measuring the thermal conductivity, for example, TPS2500S manufactured by Kyoto Electronics Manufacturing Co., Ltd. can be used.

### -Unworked Consistency-

An unworked consistency of the thermally conductive grease composition according to the disclosure is preferably from 140 to 300, more preferably from 150 to 290, and still more preferably from 160 to 280, from the viewpoint of suppressing the occurrence of the pump-out phenomenon and from the viewpoint of actual use.

The unworked consistency is measured in accordance with JIS-K2220.

### (Application)

The thermally conductive grease composition according to the disclosure is excellent in suppressing the occurrence of the pump-out phenomenon, and can be applied to gaps between various heating elements and heat radiators.

Examples of the heating element include a semiconductor component, and examples of the heat radiator include a heat sink.

### (Method for Preparing Thermally Conductive Grease Composition)

A method for preparing a thermally conductive grease composition is not particularly limited, and the surface modifier and other additives may be appropriately mixed, if necessary, in addition to the base oil, the thermally conductive filler, and the calcium carbonate particles.

A mixing order of the base oil, the thermally conductive filler, the calcium carbonate particles, the surface modifier, and other additives is not particularly limited, and these materials may be sequentially mixed with the base oil.

### Examples

Hereinafter, Examples will be described, but the invention is not limited to these Examples.

### <Examples 1 to 15 and Comparative Example 1>

Abase oil, a thermally conductive filler, calcium carbonate particles, a surface modifier, and other additives (antioxidant and cleaning agent) were mixed at blending ratios (% by mass) shown in Table 1 to prepare a thermally conductive grease composition.

### <Evaluation>

The following performance evaluation was performed using each of the obtained thermally conductive grease compositions. The results are shown in Table 1.

### (Thermal Conductivity)

The thermal conductivity was measured in accordance with ISO22007-2.

As an apparatus for measuring the thermal conductivity, TPS2500S manufactured by Kyoto Electronics Manufacturing Co., Ltd. was used.

### (Unworked Consistency)

Measurement was performed in accordance with JIS-K2220.

### (Evaluation of Pump-Out Property)

A spacer having a thickness of 2 mm was installed between an aluminum plate (trade name: A5052P, length 80 mm × width 60 mm × thickness 1 mm) and a slide glass (length 76 mm × width 26 mm × thickness from 1.2 mm to 1.5 mm), and a given amount of grease was applied and sandwiched therebetween to obtain a test piece. At the time of preparing the test piece, the amount of grease was set to be a circle having a diameter of 15 mm when sandwiched. The aluminum plate and the slide glass were used as test pieces with longitudinal directions thereof aligned in the same direction.

A thermal shock test was performed by repeatedly changing the temperature between -40°C and 85°C with the longitudinal direction of the test piece set as a vertical direction. In the thermal shock test, cooling of a sample under the condition of -40°C for 30 minutes and then heating of the sample under the condition of 85°C for 30 minutes was set as one cycle, and a total of 500 cycles were performed. For the heating and cooling test, a thermal shock testing machine TSE-11-A manufactured by ESPEC Corp. was used.

After 500 cycles, a distance (mm) of movement of the grease from the original position was measured, and the pump-out property was evaluated.

Based on the measured movement distance, the pump-out property was evaluated according to the following evaluation criteria. The smaller the movement distance, the smaller the occurrence of the pump-out phenomenon is indicated to be.

### -Evaluation Criteria-

A: Movement distance is less than 5 mm
B: Movement distance is from 5 mm to less than 10 mm
C: Movement distance is from 10 mm to les than 20 mm
D: Movement distance is 20 mm or more

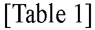

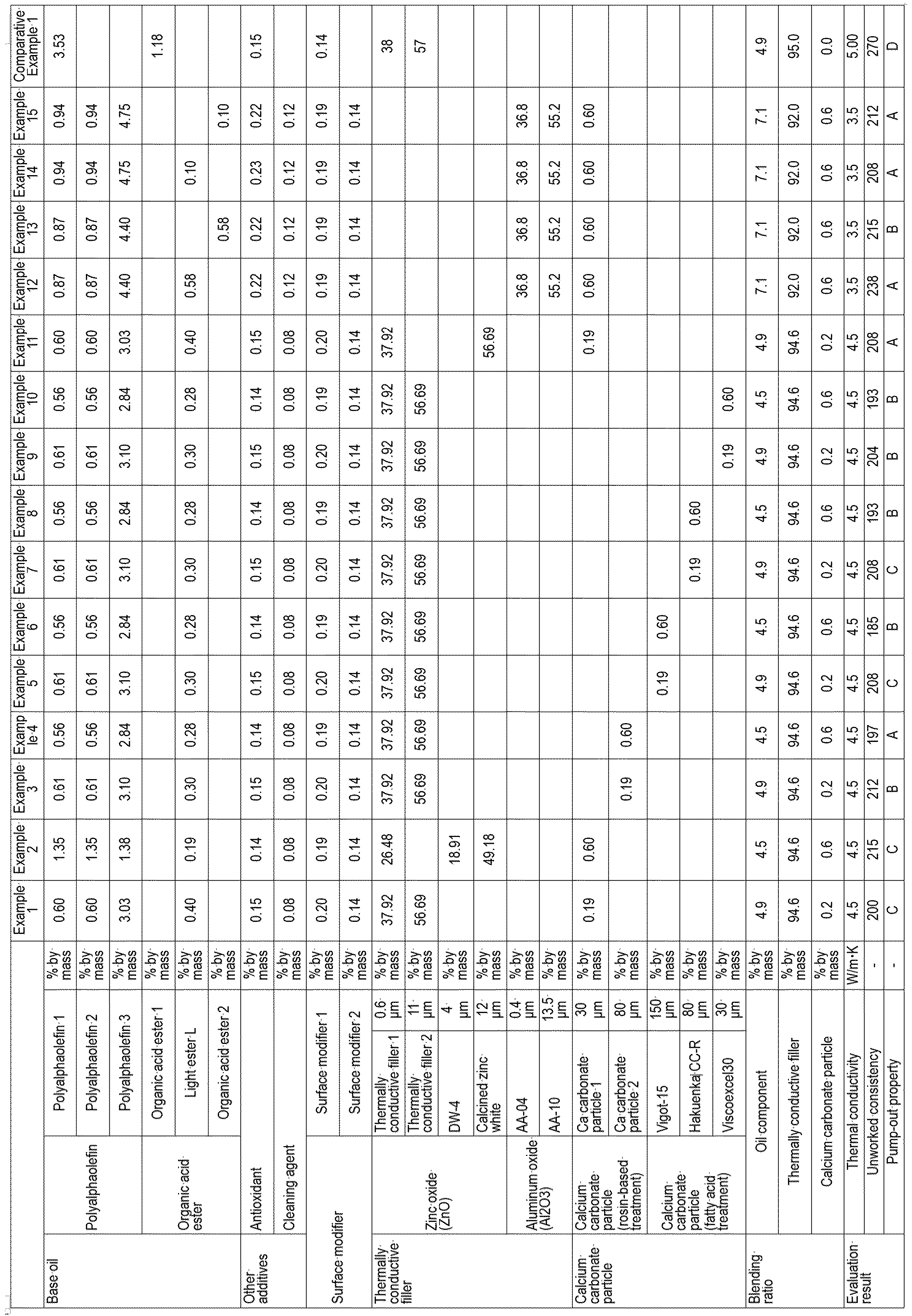

Details of the abbreviations in Table 1 are described below.

### (Base Oil)

### -Polyalphaolefin-

· Polyalphaolefin 1: manufactured by INEOS Oligomeres, DURASYN-168, polyalphaolefin (polymer of 1-decene), 40°C kinematic viscosity: 46.4 mm²/s
· Polyalphaolefin 2: manufactured by INEOS Oligomeres, DURASYIN-170, polyalphaolefin (polymer of 1-decene), 40°C kinematic viscosity: 65.3 mm²/s
· Polyalphaolefin 3: manufactured by INEOS Oligomeres, DURASYIN-1741, polyalphaolefin (polymer of 1-decene), 40°C kinematic viscosity: 412 mm²/s

### -Organic Acid Ester-

· Organic acid ester 1: manufactured by Kao Corporation, KAOLUBE 262, pentaerythritol ester, 40°C kinematic viscosity: 32.9 mm²/s
· Light ester L: manufactured by KYOEISHA CHEMICAL Co., LTD., Light ester L, lauryl methacrylate
· Organic acid ester 2: manufactured by Taoka Chemical Co., Ltd., DID A, diisodecyl adipate, 40°C kinematic viscosity: 14.2 mm²/s

### (Thermally Conductive Filler)

· Thermally conductive filler 1: manufactured by Sakai Chemical Industry Co., Ltd., trade name: 1 kind of zinc oxide, zinc oxide particles, volume average particle diameter 0.6 µm
· Thermally conductive filler 2: manufactured by Sakai Chemical Industry Co., Ltd., trade name: LPZINC-11, zinc oxide particles, volume average particle diameter 11 µm
· DW-4: manufactured by HAKUSUI TECH, trade name: DW-4, zinc oxide particles, volume average particle diameter: 4 µm
· Calcined zinc white: manufactured by HAKUSUI TECH CO., LTD., trade name: calcined zinc white, zinc oxide particles surface-treated with silane-based coupling agent, volume average particle diameter: 12 µm
· AA-04: manufactured by Sumitomo Chemical Co., Ltd., trade name: AA-04, aluminum oxide (Al₂O₃) particles, volume average particle diameter 0.4 µm
· AA-10: manufactured by Sumitomo Chemical Co., Ltd., trade name: AA-10, aluminum oxide (Al₂O₃) particles, volume average particle diameter 13.5 µm

### (Calcium Carbonate Particles)

· Ca carbonate particles 1: manufactured by Shiraishi Group, trade name: Hakuenka 0, calcium carbonate particles surface-treated with rosin-based compound, volume average particle diameter: 30 nm
· Ca carbonate particles 2: manufactured by Shiraishi Group, trade name: HOMOCAL-D, calcium carbonate particles surface-treated with rosin-based compound, volume average particle diameter: 80 nm
· Vigot-15: manufactured by Shiraishi Group, trade name: Vigot-15, calcium carbonate particles surface-treated with fatty acid, volume average particle diameter: 150 nm
· Hakuenka CC-R: manufactured by Shiraishi Group, trade name: Hakuenka CC-R, calcium carbonate particles surface-treated with fatty acid, volume average particle diameter: 80 nm
· Viscoexcel30: manufactured by Shiraishi Group, trade name: Viscoexcel30, calcium carbonate particles surface-treated with fatty acid, volume average particle diameter: 30 nm

### (Surface Modifier)

· Surface modifier 1: manufactured by Croda Japan, Hypermer KD-9, carboxylic acid dispersant, polycarboxylic acid, weight average molecular weight: 760
· Surface modifier 2: manufactured by Croda Japan, Polycol 15, polyoxyethylene lanolin alcohol

### (Other Additives)

· Antioxidant: manufactured by BASF Japan Ltd., Irganox L57, N-phenylbenzene
   Reaction product of amine and 2,4,4-trimethylpentene
· Cleaning agent: manufactured by Chevron Corporation, OLOA 5273G, mixture of calcium alkylsalicylate and mineral oil

In Table 1, the "oil component" in the column of the blending ratio indicates the total content of the base oil, the surface modifier, and other additives with respect to the entire thermally conductive grease composition.

From the results, it is found that the thermally conductive grease composition of the example suppresses the occurrence of the pump-out phenomenon.

The disclosure of Japanese Patent Application No. 2022-061109 filed on March 31, 2022 is incorporated herein by reference in their entirety. All publications, patent applications, and technical standards mentioned in this specification are incorporated herein by reference to the same extent as if each individual publication, patent application, or technical standard was specifically and individually indicated to be incorporated by reference.

## Claims

1. A thermally conductive grease composition, comprising:
a base oil;
a thermally conductive filler; and
calcium carbonate particles.

2. The thermally conductive grease composition according to claim 1, wherein a volume average particle diameter of the calcium carbonate particles is from 10 nm to 200 nm.

3. The thermally conductive grease composition according to claim 1 or 2, wherein a content of the calcium carbonate particles is from 0.1% by mass to 1% by mass with respect to a content of the thermally conductive filler.

4. The thermally conductive grease composition according to any one of claims 1 to 3, further comprising a surface modifier containing a polyalkylene glycol compound having a hydroxy group.

5. The thermally conductive grease composition according to any one of claims 1 to 4, wherein the base oil comprises a polyalphaolefin and an organic acid ester.

6. The thermally conductive grease composition according to any one of claims 1 to 5, wherein the thermally conductive filler comprises at least one selected from the group consisting of a zinc oxide and an aluminum oxide.

7. The thermally conductive grease composition according to any one of claims 1 to 6, wherein the thermally conductive filler comprises a thermally conductive filler A having a volume average particle diameter of from 0.15 µm to less than 2 µm and a thermally conductive filler B having a volume average particle diameter of from 2 µm to 40 µm.
